# EUROPÄISCHE PATENTANMELDUNG

(11) **EP 4 563 809 A1**
(43) Veröffentlichungstag der Anmeldung: **04.06.2025**
(21) Anmeldenummer: 24214765.0
(22) Anmeldetag: 22.11.2024
(51) Int. Cl.: F03D 1/06, F03D 80/00, B64C 3/00

(54) **SCHALLREDUZIERTE AERODYNAMISCHE PROFIL-STRUKTUREN**

(30) Priorität: 29.11.2023 EP 23020530
(71) Anmelder: ESM Energie- und Schwingungstechnik Mitsch GmbH, 64646 Heppenheim (DE)
(72) Erfinder: Schneider, Lukas, 64668 Rimbach (DE)
(74) Vertreter: Benz, Jürgen

(57) **Zusammenfassung**

Die Erfindung betrifft aerodynamische Profil-Strukturen, wie zum Beispiel Rotorblätter für Windkraftanlagen oder Tragflächen von Fluggeräten, bei denen auftretende stehende Wellen (Raummoden) im Innenraum des Rotorblatts durch geeignete Maßnahmen bedämpft, verhindert oder verstimmt werden. Die Erfindung betrifft insbesondere solche Profilstrukturen der genannten Formen, die stehende Wellen im Frequenzbereich unterhalb der von der Raumgröße und -geometrie abhängigen Schröderfrequenz durch strukturändernde Maßnahmen im Inneren der Profilstruktur vermeiden und minimieren können.

## Beschreibung

Die Erfindung betrifft aerodynamische Profil-Strukturen, wie zum Beispiel Rotorblätter für Windkraftanlagen oder Tragflächen von Fluggeräten, bei denen auftretende stehende Wellen (Raummoden) im Innenraum des Rotorblatts durch geeignete Maßnahmen bedämpft, verhindert oder verstimmt werden.

Die Erfindung betrifft insbesondere solche Profilstrukturen der genannten Formen, die stehende Wellen im Frequenzbereich unterhalb der von der Raumgröße und -geometrie abhängigen Schröderfrequenz durch strukturändernde Maßnahmen im Inneren der Profilstruktur vermeiden und minimieren können.

Die Erfindung betrifft auch entsprechende Profilstrukturen, welche durch zusätzliche, im Innenraum angebrachte passive und aktive Dämpfungsvorrichtungen Einfluss auf unerwünschte Schallereignisse jeglicher Art auch oberhalb der Schröderfrequenz nehmen können.

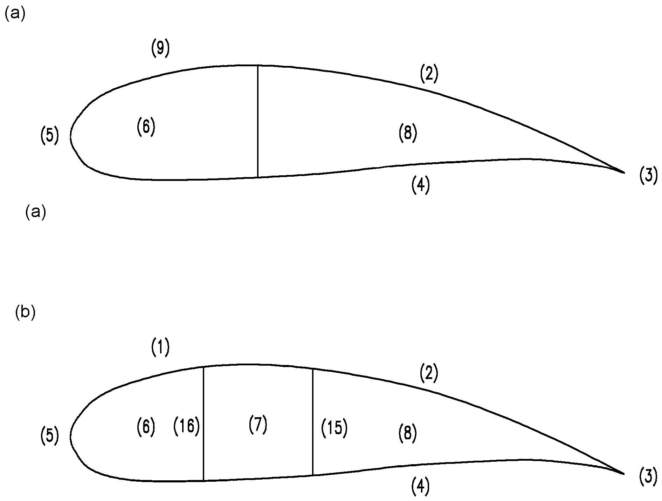

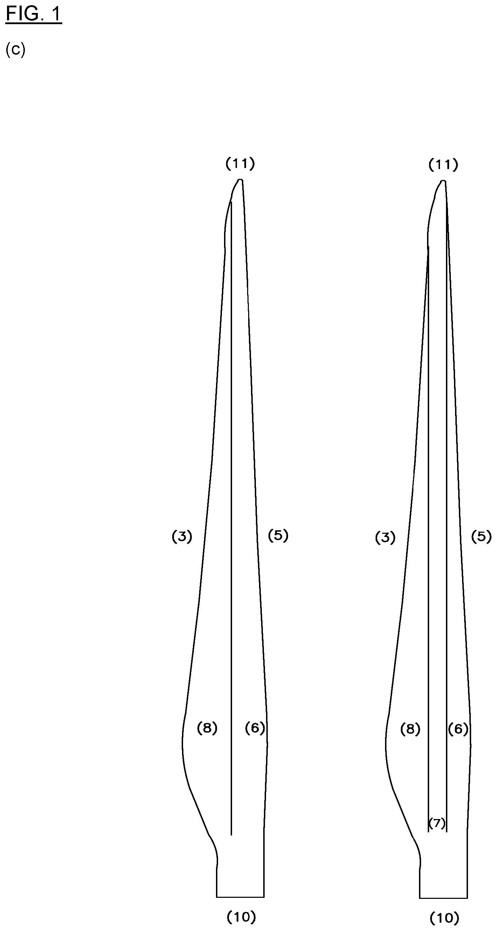

Der Innenraum von Rotorblättern oder anderen aerodynamischen Profilen ist ein stark hallender Hohlraum mit langen Nachhallzeiten (5s und mehr).Der Schall wird dabei vor allem von stark ausgeprägten stehenden Wellen verstärkt. Der übliche Blattaufbau derartiger Rotorblätter des Standes der Technik (siehe Fig. 1) besteht aus zwei oder drei Hohlräumen, die sich in der Längsachse des Rotorblatts erstrecken. Stehende Wellen können sich vor allem in diesen länglichen Hohlräumen in Quer- und Längsrichtung ausbilden. Mit einem maximalen Durchmesser von 3m (5MW-Klasse) an der Blattwurzel eines Windkraftanlagen-Rotorblattes liegen die tiefsten stehenden Wellen in Querrichtung bei ca. 60Hz. Durch die Verjüngung des Blatts über die Länge werden die Wellenlängen kürzer und die Frequenzen der stehenden Wellen in Querrichtung höher. In Querrichtung treten also kontinuierlich ab ca. 60Hz stehende Wellen auf, die je nach Form des Blatts stärker oder schwächer ausgeprägt sind. In der Vermessung eines Blatts der 4MW-Klasse liegen die nachgewiesenen Frequenzen der stehenden Wellen in Querrichtung zwischen 70Hz und 125Hz. In Längsrichtung sind die Abmessungen der aktuellen Rotorblätter viel größer (70m und mehr). Somit treten stehende Wellen in Längsrichtung bei 2,5Hz und Vielfachen davon auf. Besonders energiehaltig sind tieffrequente stehende Wellen (2,5Hz-200Hz) in Längsrichtung des Rotorblatts. Die stehenden Wellen in aktuellen Rotorblättern haben lange Nachhallzeiten (niedrige Dämpfung), da die runden und schallharten Innenflächen des Blatts die Schallwellen gut reflektieren und somit viel Schallenergie im Blatt gespeichert, d.h. wenig Energie pro Zeiteinheit dissipiert wird. Es wurden Nachhallzeiten von 5s und mehr gemessen. In Längsrichtung enthalten insbesondere die stehenden Wellen im mittleren Hohlraum (7) (bei Blättern mit drei Hohlräumen) viel Energie, da sich die Kontur dieses meist rechteckigen Hohlraums über die Rotorblattlänge nur in der Höhe verändert. Damit wird die stehende Welle nur wenig gestört und sie kann bei Anregung mit konstanter Frequenz viel Energie speichern. Dadurch werden die Amplituden der Schalldruckschwankungen sehr groß und somit auch die Auswirkung auf die Blattstruktur und die Schallabstrahlung in die Umgebung. Dieser Fall tritt besonders dann auf, wenn die Anregungsfrequenzen bei Anlagen-Nenndrehzahl mit der Frequenz der stehenden Welle übereinstimmt.

Getriebe und Generatoren in Windkraftanlagen (WKA) leiten - während des Betriebs - sinusförmige Kräfte in die Struktur des WKA ein. Die daraus entstehenden Schwingungen im hörbaren Frequenzbereich von 20-20.000Hz können im ungünstigen Fall über die Außenflächen der WKA, d.h. vor allem über die Blätter, den Turm und die Gondel, in die Umgebung abgestrahlt werden und so Mensch und Umwelt belästigen. Messverfahren sind in der Norm DIN EN 61400-11 festgelegt. Über welche Fläche der Schall abgestrahlt wird, hängt von der Frequenz ab, vom Transferpfad von Schallquelle (meist Getriebe und/oder Generator) zu Abstrahlfläche und vom Abstrahlgrad der jeweiligen Fläche.

Bislang ist man davon ausgegangen, dass die Intensität des von außen wahrgenommen Lärms von der Größe, Position, Richtung und Frequenz der eingeleiteten Kräfte in Generator und Getriebe, dem Eigenschwingverhalten der WKA-Struktur, der Größe der abstrahlenden Oberfläche und dem Abstrahlgrad der Strukturschwingung in die Luft abhängt.

Dabei wurde außer Acht gelassen, dass in den Hohlräumen der Blätter stehende Wellen vorhanden sind, die durch die Schwingung der Blattstruktur angefacht werden und verstärkend auf die Struktur zurückwirken. Fallen verschiedene Umstände ungünstig zusammen, d.h. Anregungsfrequenz und Richtung der Kräfte aus Getriebe und Generator, Eigenverhalten der Blattstruktur und des Triebstrangs und Frequenz bzw. Schwingform der stehenden Wellen, so haben Windkraftanlagen mit stark hallenden Rotorblättern unterhalb der Schröder-Frequenz ein erhöhtes Risiko Tonhaltigkeiten auszubilden. In diesem Fall verhält sich das Rotorblatt wie ein akustischer Resonanzkörper.

Oberhalb der Schröder-Frequenz kommen die breitbandigen Geräusche meist aus aerodynamischen Anregungen durch Ablösungen und Strömungsgeräuschen der Blattspitze sowie Hinter- und Vorderkante. Diese Geräusche werden zwar meist außerhalb des Blatts erzeugt, können aber durch die Blattstruktur in das Rotorblatt eindringen und werden durch die stehenden Wellen im Blatt verstärkt und an besonders kritischen Stellen der Blattfläche großflächig abgestrahlt. Die Position der Abstrahlung hängt von der Ausprägung der stehenden Welle und von dem Strukturverhalten des Blatts ab. Besonders kritisch ist, wenn Schalldruckmaxima der stehenden Welle auf besonders große, leicht anzuregende oder weiche Teile der Blattstruktur treffen. Diese Blattflächen wirken dann als Lautsprecher, der den Schall in die Umgebung abstrahlt. Da die Flächen des Blatts meist sehr groß, relativ dünnwandig und weich sind, ist von einem relativ großen Lautsprecher auszugehen.

Bei einer stehenden Welle schwingen die Luft-Moleküle auf beiden Seiten eines Schwingungsknotens symmetrisch. Schwingungsknoten sind demnach Orte größter Druckänderung, und stellen also Druckbäuche dar. In den Schwingungsbäuchen ist der Druck konstant, so dass hier Druckknoten vorliegen. Der Schalldruck (Wechseldruck) in der stehenden Welle ist demnach Null in den Druckknoten und hat sein Maximum in den Druckbäuchen bzw. Schwingungsknoten. Bei einer stehenden Welle bei z.B. 20Hz in einem abgeschlossenen länglichen Raum, müssen die reflektierenden Wände mindestens 8,6m auseinander liegen. In Blättern mit 70m Hohlraumlänge kann auch eine stehende Welle bei 20Hz auftreten. In diesem Fall passt nicht nur eine Halbwelle zwischen die Enden des Hohlraums, sondern vier ganze Wellenlänge. Bei 20.000Hz passen 4000 Wellenlängen in ein Blatt von 70m Länge, da die Wellenlänge nur 17,3mm beträgt.

Rotorblätter von Windkraftanlagen haben ab 0,4Hz unzählige Struktur-Eigenmoden, die mit steigender Frequenz immer näher beieinander liegen. Haben diese Eigenmoden eine niedrige Dämpfung, einen hohen Abstrahlgrad und liegen die Frequenzbänder der Anregung im Bereich der Eigenmoden besteht die Gefahr dominante Töne nach Außen abzustrahlen. Stehende Wellen sind insbesondere deswegen kritisch, weil sie nicht bei einer Frequenz liegen, sondern durch die Querschnittsverjüngung im Blatt einen breiten Frequenzbereich abdecken. In Längsrichtung treten stehende Wellen bei aktuellen Rotorblättern ca. alle 2,5Hz auf und sind damit auch als kritisch zu bewerten.

Schallreduzierende Maßnahmen für Rotorblätter oder ähnliche aerodynamische Profil-Strukturen sind bislang wenig bekannt, werden jedoch aufgrund der immer größer werdenden Rotorblätter bei Windkraftanlagen verstärkt gefordert.

Aus der DE 102007046253 A1 (General Electric, Schenectady) ist ein Rotorblatt für Windkraftanlagen bekannt, welches eine Akustikverkleidung mittels einer schallporösen Oberflächenschicht aufweist. Hierzu muss also die Außenkontur des Blattes verändert werden, was aerodynamische Nachteile mit sich bringt.

Es sind bislang keine Rotorblätter, insbesondere für Windkraftanlagen, bekannt, welche durch schallreduzierende Maßnahmen im Inneren des Profils gezielt leiser gemacht werden können, insbesondere von Schallereignissen, welche auf stehende Wellen zurückzuführen sind.

Aus dem oben Dargelegten ergibt sich somit die Aufgabe der hier vorgestellten Erfindung, stehende Wellen, die im Inneren von Rotorblättern oder anderen aerodynamischen Profil-Strukturen mit zum Teil unterschiedlichen Frequenzen innerhalb der gleichen Struktur vorwiegend unterhalb der Schröderfrequenz auftreten, durch strukturverändernde Maßnahmen im Inneren der aerodynamischen Profil-Struktur, insbesondere eines Windkraftanlagen-Rotorblattes, zu verändern oder zu beseitigen, ohne dabei Änderungen an der strömungssensitiven Außenkontur der aerodynamischen Struktur vornehmen zu müssen, wie dies z.B. in der zitierten DE102007046253 A1 beschrieben ist.

Des Weiteren ist es Aufgabe der Erfindung zusätzlich schallreduzierende Maßnahmen im Innenraum besagter aerodynamischer Profil-Strukturen durchzuführen, welche Schallereignisse nicht nur unterhalb, sondern auch oberhalb der für eine bestimmte Raumgeometrie charakteristischen Schröderfrequenz betrifft.

Die Aufgabe wurde durch Bereitstellung der unten und in den Ansprüchen beschriebenen schallreduzierten aerodynamischen Profil-Strukturen gelöst.

Mit den erfindungsgemäßen Profil-Strukturen kann eine Verstärkung von Einzeltönen durch stehende Wellen in den Hohlräumen der Strukturen verhindert und das Risiko von tonhaltigen Bauteilen und Anlagen, wie Windkraftanlagen, die mit den erfindungsgemäßen Profilstrukturen ausgestattet sind, reduziert werden.

Es wurde gefunden, dass das Schallabstrahlverhalten, zum Beispiel eines Rotorblatts, in die Umgebung reduziert werden kann, indem die Schallenergie der im Blatt auftretenden stehenden Wellen unterhalb und oberhalb der Schröderfrequenz durch verschiedene Maßnahmen im Innenraum des Blatts bedämpft, verstimmt oder verhindert werden können. Eine direkte Luftverbindung zwischen Innenraum und Außenkontur des Blatts ist dafür nicht notwendig. Die beiden Blattschalen auf der Druckseite (4) und Saugseite (1) des Rotorblattes müssen im Vergleich zum aktuellen Stand der Technik nicht verändert werden. Es sind keine Bohrungen, Perforierungen oder andere Schwächung der Blattschalen und erforderlich. Lediglich die Zwischenwände und gegebenenfalls die Innenkonturen der Blattschalen werden erfindungsgemäß verändert.

Gegenstand der Erfindung ist somit eine aerodynamische Profil-Struktur, vorzugsweise in Form eines Rotorblattes oder einer Tragfläche zur Verminderung oder Dissipation von Schallenergie und damit von Geräuschentwicklung durch stehende Wellen, welche bei Anregung unterhalb und / oder oberhalb der Schröderfrequenz innerhalb der Profil-Struktur auftreten, wobei die Struktur zwei oder mehr Innenkammern oder Hohlräume (6)(7)(8) aufweist, die durch längs- und/oder querversteifende Zwischenwände (15)(16) im Inneren der Profil-Struktur gebildet werden, wodurch Kompartimente mit gleicher oder unterschiedlicher Raumgeometrie vorliegen.

Erfindungsgemäß weisen dabei die besagten Zwischenwände (15)(16) der Innenkammern (6)(7)(8) folgende Merkmale auf:
(i) sie sind an den Stellen innerhalb der Profil-Struktur angeordnet, in deren Bereich - entsprechend der vorliegenden Raumgeometrie- hohe Schalldrücke oder Schalldruck-Maxima von stehenden Wellen auftreten, und
(ii) sie weisen in diesem Bereich bzw. an diesen Stellen
   (a) eine Vielzahl von Öffnungen (12) in Form von Schlitzen oder Bohrungen (14) auf, durch welche Luft strömen kann, oder
   (b) an ihnen oder in unmittelbarer Nähe zu ihnen sind reaktive Akustikelemente in Form von Schallabsorbern (23)(24)(27) angebracht.

Durch beide Maßnahmen kann der Schalldruck der stehenden Wellen in den betroffenen Innenkammern so minimiert oder dissipiert werden.

Erfindungsgemäß können beide Maßnahmen auch kombiniert werden: es können also an den Zwischenwänden (15)(16), an denen hohe Schalldrucke der stehenden Wellen auftreten, sowohl Öffnungen (12) zu benachbarten Innenkammern als auch Schallabsorber (23)(24) vorgesehen werden.

In einer ersten Ausführungsform sind Öffnungen (12) in oder Schallabsorber an solchen Zwischenwänden(15)(16) vorgesehen, welche in Längsrichtung zur Profil-Struktur angeordnet sind und dadurch entsprechende äußere (6)(8) und gegebenenfalls mittlere (7) Innenkammern ausbilden. Somit sind besagte Öffnungen und reaktive Akustikelemente in Querrichtung zur Profil-Struktur und in Bewegungsrichtung der auftretenden stehenden Wellen ausgerichtet.

Die Öffnungen (12) und Schallabsorber (23)(24) sind dabei vorzugsweise auf ausgewählte Bereiche einer Zwischenwand (15)(16) konzentriert sind, und diese Bereiche haben einen definierten Abstand zueinander, welcher sich aus den auftretenden stehende Wellen ergibt.

Die Öffnungen (12) verbinden benachbarte, vorzugsweise längs ausgerichtete Innenkammern, bzw. Hohlräume. Um stehende Wellen unterhalb der Schröderfrequenz zu dissipieren, sollten die Öffnungen (12) bei einem Rotorblatt in Abhängigkeit von ihrer Anzahl und der Erregerfrequenz groß genug sein.

In einer Ausführungsform der Erfindung sind die Öffnungen (12) mit passenden Rohrstücken (17) ausgestattet, wodurch bewirkt wird, dass die durch die Rohrstücke hindurch bewegte Luft gegen die stehende Welle an dieser Stelle schwingt und deren Frequenz erniedrigt.

In einer weiteren Ausführungsform der Erfindung sind die Öffnungen (12) der erfindungsgemäßem Profil-Struktur so gestaltet, dass sie als Helmholtz-Resonator wirken. Alternativ können die Rohrstücke direkt mit Helmholtz-Resonatoren ausgerüstet sein.

In einer anderen Ausführungsform der Erfindung weist die erfindungsgemäße Profil-Struktur zusätzliche in Längsrichtung aneinandergereihte, gleich- oder unterschiedlich lange, in sich abgeschlossene geschlossene Kammern auf, welche durch zusätzliche Trennwände (20)(21)(22) in den ursprünglichen Innenkammern (6)(7)(8) gebildet werden. Die Trennwände können dabei auch in Bezug auf die Längsachse der Profil-Struktur schräg angeordnet sein, also einen Winkel mit der Längsachse bilden, wodurch ggf. neu entstehende stehende Wellen in ihrer Frequenz und Energie geändert werden. Die Abstände der Kammern zueinander sind dabei so gewählt, dass die Frequenzen der neu-entstandenen stehenden Wellen nicht mit Eigenfrequenzen der Profil-Struktur, oder mit der Eigenfrequenz eines mit ihr verbundenen anregenden Maschineteils zusammenfallen. Die Trennwände dieser zusätzlichen Kammern können ebenfalls Öffnungen (12) und/oder Schallabsorber aufweisen, welche wiederum im Bereich der Druckmaxima der dort auftretenden stehenden Wellen konzentriert sind.

Als reaktive Akustikelemente bzw. Schallabsorber eignen sich alle bisher bekannten Vorrichtungen zur Schallreduzierung oder Schallbeeinflussung, wie beispielsweise, jedoch nicht abschließend, aufgeführt:
- Auskleidungen mit schallaktiven Materialen, wie Dämmplatten
- Helmholtz-Resonatoren,
- Membranabsorbern,
- Verbundplatten-Resonatoren,
- Breitband-Kompaktabsorbern,
- asymmetrisch-strukturierte Absorbern,
- Diffusoren,
- mikroperforierten Platten- oder Folienabsorbern,
- mikroperforierter Blech- oder Kunststoffverkleidung, oder
- aktiven Systemen, welche stehende Wellen und Geräusche aller Art minimieren.

Die genannten Maßnahmen können im gesamten hörbaren Frequenzbereich (20-20.000Hz) eingesetzt werden.

Die Frequenzen oberhalb der Schröder-Frequenz haben relativ kurze Wellenlängen (bei 500Hz sind das 0,69m). D.h. die Wellenbäuche sind nicht weit voneinander entfernt und die Maßnahmen gegen stehende Wellen oberhalb der Schröderfrequenz sind an keinen speziellen Ort im Blatt gebunden. Durch die Verjüngung des Blatts und die Kanten an der Blattwurzel (10) sammelt sich die Schallenergie an der Blattwurzel. Akustisch poröse Materialien sollten also möglichst in der Nähe oder an der Blattwurzel (10) installiert werden.

Ein Rotorblatt einer Windkraftanlage ist somit erfindungsgemäß in seinem Innenraum bezüglich der dort auftretenden stehenden Wellen so erfindungsgemäß anzupassen, dass insbesondere bei Tonhaltigkeiten der Windkraftanlage kritische stehende Wellen durch oben genannten Maßnahmen unterhalb der Schröderfrequenz bedämpft, verhindert und verstimmt werden. Diese Maßnahmen reduzieren Schwingungen inklusive Geräusche der Anlage, die auf Ausbildung von stehenden Wellen zurückzuführen sind. Die genannten Maßnahmen werden so dimensioniert und ausgestaltet, dass sie mindestens einen Frequenzbereich zwischen 5 und 500 Hz, insbesondere 20 -und 300 Hz, abdecken und in der Hohlstruktur bzw. den Hohlräumen der Blätter des Rotors, insbesondere im Bereich der Blattflächen oder an der Blattwurzel, und überall dort, wo der Schalldruck bzw. die Schalldruckänderung der ungedämpften stehenden Welle am größten ist, angebracht sind. Die verwendeten Maßnahmen sind bezüglich ihrer Abmessungen und Konstruktion an die örtlichen Gegebenheiten sowie an die hier zu beachtenden bzw. dämpfenden Frequenzen nach allgemeinen physikalischen Grundsätzen angepasst.

Bezüglich der breitbandigen Schallabstrahlung durch aerodynamische Anregung oberhalb von ca. 150Hz kann an diesen Blättern die Ausbreitung des Schalls in der Luft des Innenraums durch zusätzliche akustisch poröse Materialien an den Innenwänden erreicht werden. Durch Auskleidung von Innenwänden einer erfindungsgemäßen Profil-Struktur mit Hilfe derartiger Materialien, können so, insbesondere Rotorblätter von Windkraftanlagen zusätzlich bedämpft werden und somit oberhalb der Schröderfrequenz den Innenraum der Rotorblätter leiser machen. Das erfindungsgemäße Rotorblatt mit schallreduziertem Innenraum hat eine schallreduzierende Wirkung auf den Außenbereich des Rotorblatts, denn die Strukturschwingungen des Blatts werden durch den rotorblattinternen Luftschall verstärkt. Die Schall-abstrahlende Fläche des Rotorblatts hat durch Ihre relative Größe und die Höhe einen großen Anteil am Gesamtschallverhalten einer Windkraftanlage. Jegliche Beruhigung des Blattinneren hat eine Auswirkung auf das Schallverhalten außerhalb des Rotorblatts und damit der Windkraftanlage.

Wenn man stehende Wellen oberhalb der Schröderfrequenz stören bzw. beeinflussen will, sollten die erfindungsgemäßen Öffnungen oder Schlitze oder Bohrungen (12) in Abhängigkeit von der Raumgeometrie und Größe der Profil-Struktur ausreichend klein sein. Oberhalb der Schröder-Frequenz können ebenfalls akustisch poröse Materialien, wie Schalldämmmatten oder geeignete Wandbeschichtungen an die Wände des Blattinnenraums im Inneren der Struktur und an ausgewählten Stellen eingebracht werden, um den breitbandigen Schall aus der aerodynamischen Anregung zu bedämpfen.

Gegenstand der Erfindung sind insbesondere Rotorblätter für moderne Hochleistungs-Windkraftanlagen, wobei die Rotorblätter die beschriebenen erfindungsgemäßen aerodynamischen Profil-Strukturen aufweisen.

Im Folgenden wird die Erfindung anhand der gezeigten Abbildungen weiter beschrieben:
Fig. 1 (a)(b)(c)
   (a)(b) zeigen jeweils einen schematischen Querschnitt durch die Kontur einer Profil-Struktur mit zwei, bzw. drei längs ausgerichtete Hohlkammern (6)(7)(8) nach dem Stand der Technik. Die Innenkammern entstehen durch Einziehen von einer entsprechenden Anzahl von Zwischenwänden (15)(16).
   (c) zeigt den Schnitt für ein Blatt mit drei Hohlräumen (rechtes Bild) und einem Schnitt mit zwei Hohlräumen im Innenraum (linkes Bild) nach dem Stand der Technik.

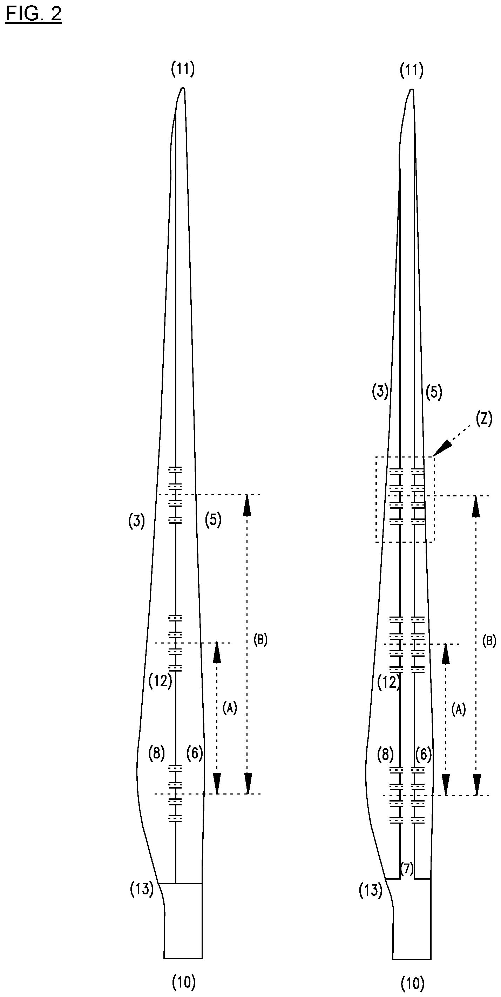

Fig. 2 zeigt die beiden Blattvarianten aus Fig. 1(c) im Schnitt jedoch mit der erfindungsgemäßen Profil-Struktur, bei welcher die Hohlräume (6)(7)(8) durch Öffnungen (12) miteinander verbunden sind. Die Öffnungen konzentrieren sich auf besondere Bereiche. Die Anhäufungen der Öffnungen sind (A) bzw. (B) voneinander entfernt. Alternativ können die äußeren Hohlräume (6) und (8) auch durch akustische Abtrennung (13) vom Rest des Blatts separiert werden. (3) und (5) stellen Hinterkante bzw. Vorderkante des Rotorblattes dar, (10) und (11) zeigen die Blattwurzel bzw. die Blattspitze.

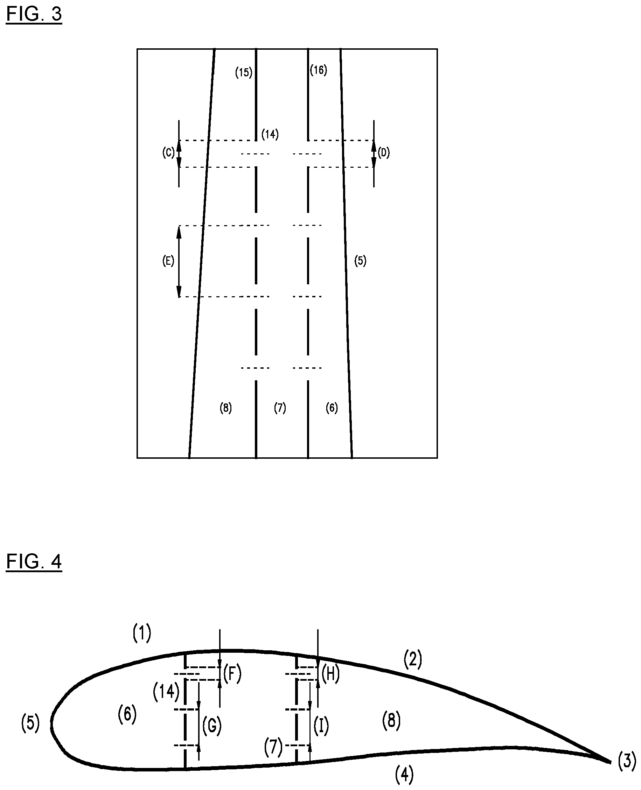

Fig. 3 zeigt eine Ausführung des Ausschnitts Z der erfindungsgemäßen Profil-Struktur aus Fig. 2. im Längsschnitt des Blattes. Die Ausführung der Öffnung sind als einfache Schlitze (14) in den Zwischenwänden (15) und (16) ausgeführt. Die Öffnungen haben die Länge (C) bzw. (D) und den Abstand (E) in Längsrichtung des Blattes.
Fig. 4 zeigt eine Ausführung des Ausschnitts Z aus Fig. 3 im Querschnitt des Blattes. Die Ausführung der Öffnung sind als einfache Schlitze(14) in den Zwischenwänden (15) und (16) ausgeführt. Die Öffnungen haben die Höhe (F) bzw. (H) und den Abstand (G) bzw. (I) in Querrichtung des Blattes.

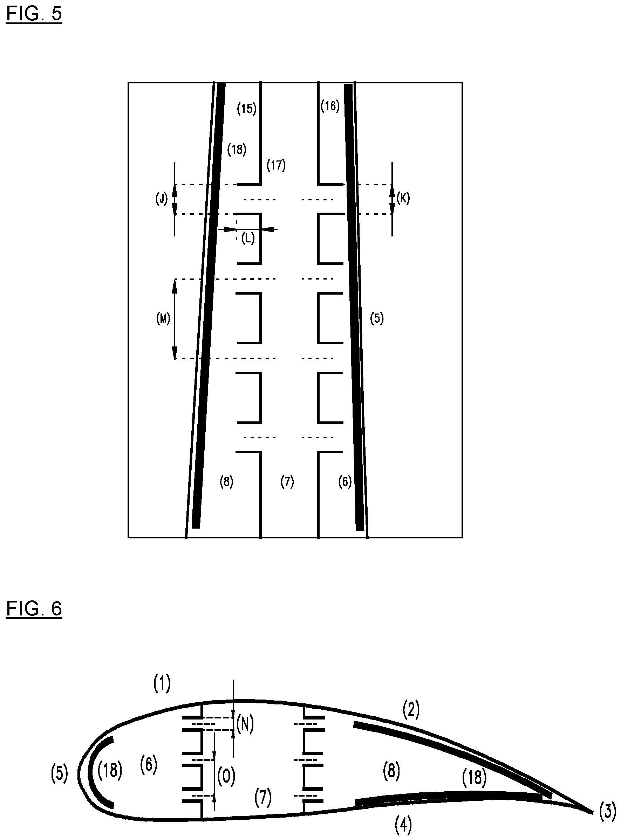

Fig. 5 zeigt eine Ausführung des Ausschnitts Z aus Fig. 2 im Längsschnitt des Blatts. Die Öffnungen (14) sind als rohrförmige Verbindungsstücke (17) (zylindrisch oder rechteckig) ausgeprägt. An den Wänden der äußeren Hohlräume (6) und (8) ist akustisch poröses Material (18) angebracht. Die rohrförmige Öffnung hat die Länge (L) und den Durchmesser (J) bzw. Länge (K). Die Öffnungen haben den Abstand (M).
Fig. 6 zeigt eine Ausführung des Ausschnitts Z aus Fig. 2 im Querschnitt des Blattes. Die Öffnungen sind rohrförmig ausgeprägt. An den Wänden der seitlichen äußeren Hohlräume (6) und (8) ist akustisch poröses Material (18)im Bereich der Vorderkante und Hinterkante des Profils angebracht. Die rohrförmige Öffnung hat den Durchmesser/ Höhe (N) und den Höhenabstand (O).

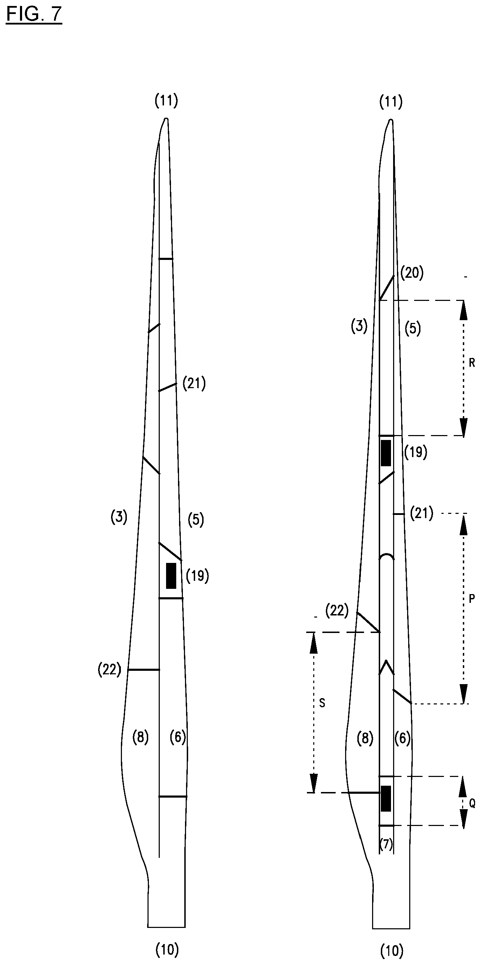

Fig. 7 zeigt ein Rotorblatt in den beiden Ausführungen der Fig. 2 (linkes Bild: Blatt mit zwei Innenkammern in Längsrichtung, rechtes Bild: Blatt mit drei Innenkammern in Längsrichtung), jedoch mit zusätzliche erfindungsgemäßen Strukturen, wie Abtrennungen (20)(21)(22) und Dämpfungsmaterialen (19), die vornehmlich in Längsrichtung des Blatts stehende Wellen verhindern und dissipieren und die Abstände (P), (Q), (R) und (S) haben. Als Beispiel sind Abtrennungen eingefügt, die senkrecht zur stehenden Welle oder in einem Winkel zu stehenden Welle angeordnet sind. Runde und pfeilförmige Trennwände (20)(21)(22) sind ebenso dargestellt.

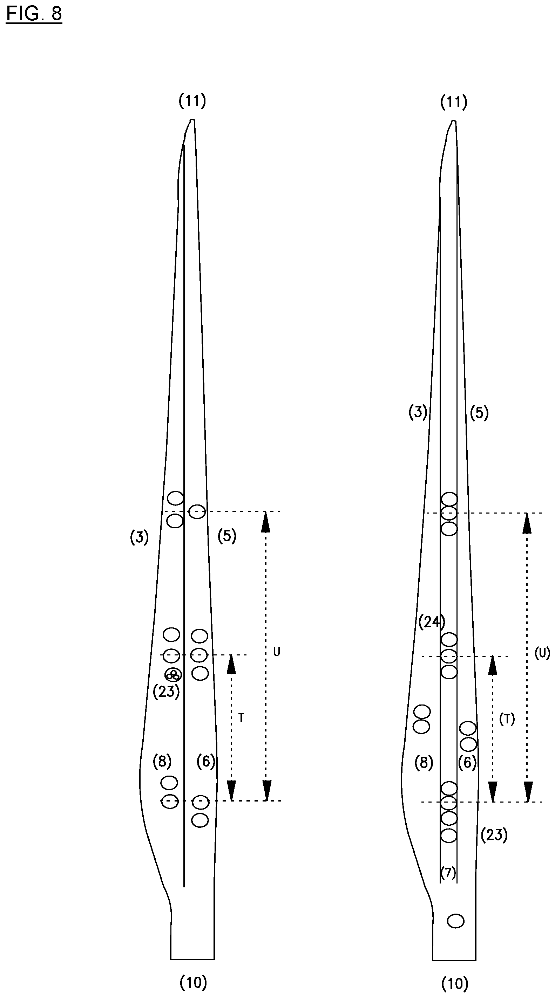

Fig. 8: zeigt ein Rotorblatt in den beiden Ausführungen der Fig. 2 (linkes Bild: Blatt mit zwei Innenkammern in Längsrichtung, rechtes Bild: Blatt mit drei Innenkammern in Längsrichtung), jedoch mit reaktiven Akustikelementen (23)(24), wie Helmholtz-, Membran- oder Kastenresonatoren, welche die Abstände (T) und (U) aufweisen und entsprechend der Druckmaxima der stehenden Wellen an den betreffenden Stellen der Profil-Struktur platziert sind.
Fig. 9 (a)(b):
   (a) zeigt einen Querschnitt eines erfindungsgemäßen Rotorblatt-Profils (1) mit oberer SaugSeite (2) und unterer Druckseite (4) und mit drei Innenkammern (6)(7)(8). An den Innenflächen des Profils sind, vorzugsweise im Bereich der Druckmaxima der stehenden Wellen Helmholtz-Resonatoren (23) angebracht.
   (b) zeigt einen Querschnitt eines erfindungsgemäßen Rotorblatt-Profils (1) mit oberer SaugSeite (2) und unterer Druckseite (4) und mit drei Innenkammern (6)(7)(8). An den Innenflächen des Profils sind, vorzugsweise im Bereich der Druckmaxima der stehenden Wellen Membran- oder Kastenabsorber (24) angebracht.

Im Folgenden wird die Erfindung im Detail näher beschrieben:
Im Frequenzbereich unterhalb der Schröderfrequenz können die stehenden Wellen im Blatt durch Öffnungen in die Zwischenwänden (15) und (16) verstimmt oder bedämpft werden (siehe Fig. 2) Diese Öffnungen können zum einen einfache Schlitze oder Bohrungen (14) sein, die möglichst an den Druckmaxima der relevanten stehenden Welle angebracht sind. Da stehende Wellen durch die Raumgeometrie definiert werden und hier besonders durch die reflektierenden Wände, kann die stehende Welle durch dieser Maßnahme nicht ausweichen.

Damit reduziert diese Maßnahme den Druck an den Druckmaxima einfach dadurch, dass die Luft aus dem mittleren Hohlraum (7) in die seitlichen Hohlräume (6) und (8) ausweichen kann. Umgekehrt kann die Luft in den mittleren Hohlraum (7) ausweichen, wenn in den seitlichen Hohlräumen (6) und (8) stehenden Wellen auftreten. Die Schlitze und Bohrungen (14) können über die Abmessungen C, D, E, F, G, H, I so gestaltet werden, dass sie auch als Helmholzresonator wirken und somit einen noch größeren reduzierenden Einfluss auf die stehende Wellen haben. Auch die Anzahl der Öffnungen kann bzgl. der Wirkung optimiert werden. Hier sind aber auch Anforderungen an die Festigkeit des Blatts zu beachten. Die Wirkung wird zusätzlich gefördert, wenn - im Fall einer stehenden Welle im mittleren Hohlraum (7) - die seitlichen Hohlräume durch eine akustische Abtrennung (13) geschlossen werden. Tritt die stehende Welle in einem der seitlichen Hohlräume (6) und (8) auf, kann auch der mittlere Hohlraum (7) akustisch geschlossen werden. Die Auslegung des Helmholzresonators erfolgt über gängige physikalische Zusammenhänge. Die Öffnungen in den Zwischenwänden (15) und (16) können sich dabei auch unterscheiden, insbesondere dann, wenn sich die Volumen im Hohlraum an der Vorderkante (6) und dem an Hinterkante (8) unterscheiden. Die Abstände A und B (siehe Fig. 2) werden durch die Druckmaxima der stehenden Welle bestimmt. Für eine gute Wirkung sollten die Anhäufungen möglichst im Bereich der Druckmaxima der stehenden Welle sein. Treten mehr oder weniger als drei Druckmaxima auf, kann die Anzahl der Öffnungsanhäufungen natürlich an die Druckmaxima angepasst werden.

Die Wirkung der Öffnung kann weiter gesteigert und auf tiefere Frequenzen gesenkt werden, wenn rohrförmige Verbindungen (17) zwischen den Hohlräumen eingebaut werden (Fig. 5, 6). Die Luftmasse, die sich in den Verbindungen (17) bewegt reduziert die Frequenz und schwingt (analog zu einem Schwingungstilger bei Strukturschwingungen) gegen die stehende Welle. Die Wirkung und Frequenzbreite dieser Maßnahme wird zusätzlich gefördert, wenn die Hohlräume (6), (7) und/oder (8) geschlossen und wenn die Innenwände der Hohlräume durch akustisch poröses Material ausgekleidet werden.

Die hier genannten Maßnahmen sind prinzipiell auch für den Frequenzbereich oberhalb des Schröderfrequenz geeignet, allerdings müssen die Öffnungen (12) und deren Abstände sehr klein gehalten werden, was durch Zwischenwände (15) und (16) mit vielen kleinen Perforierungen erreicht werden kann.

Die stehenden Wellen können durch zusätzliche Strukturen in den Hohlräumen bzw. Innenkammern der Anlage verstimmt, gestört und dissipiert werden. Die in Fig. 7 dargestellten Abtrennungen (20), (21) und (22) führen dazu, dass durch die kürzeren und ungleichmäßigen Abstände in Längsrichtung des Blatts verschiede neue stehende Wellen mit höheren Frequenzen entstehen. Hinzu kommt, dass diese neuen stehenden Wellen weniger Energie enthalten und damit die Schallabstrahlung des Blatts nach außen bei den neuen Frequenzen reduziert ist. Die in der stehenden Welle enthaltene Energie wird weiter reduziert indem die Abtrennung schräg zu Längsachse und damit zur Bewegungsrichtung der stehenden Welle gestellt werden. Auch andere Formen wie z.B. pfeilförmige oder runde Abtrennung sind denkbar, da diese Formen die Energie des Schall zerstreuen können. Zusätzliches akustisch poröses Material (19) in den Volumen der abgetrennten Hohlräume führt zu einer zusätzlichen Dämpfung der stehenden Wellen. Die Abstände und Längen P, Q, R uns S dieser Maßnahmen sind so zu wählen, dass die Frequenzen der neuen stehenden Wellen nicht mehr mit Eigenfrequenzen des Blatts oder anregenden zusammenfallen. Die genannten Maßnahmen sind vor allem gegen stehende Wellen im Frequenzbereich unterhalb der Schröderfrequenz geeignet.

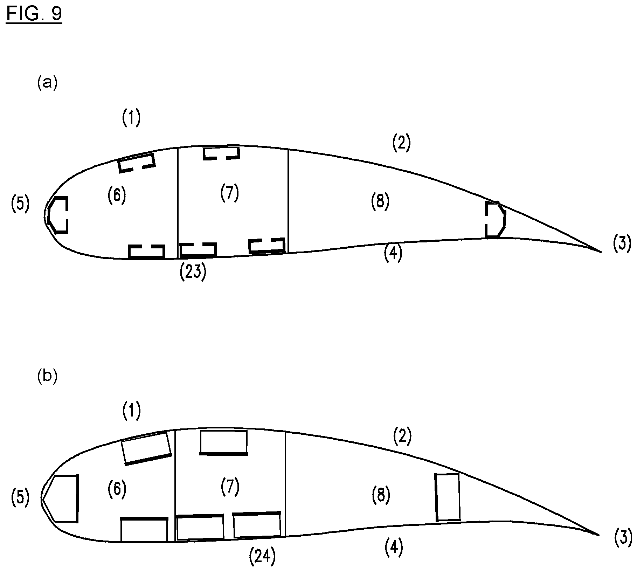

Weiterhin ist es zusätzlich möglich durch Einbau eines oder mehrerer Membranabsorber und/oder Helmholtz-Resonatoren im Inneren des Rotorblattes, die stehende Welle durch Dämpfung und Gegenschwingungen zu reduzieren:
Ein Membranabsorber gemäß Fig. 9 (b) kann als Tilger aufgefasst werden, dessen Masse, Dämpfung und zum Teil auch die Steifigkeit über eine Membran realisiert werden. Eine zusätzliche Steifigkeit und Dämpfung kann durch einen Hohlraum hinter der Membran erzeugt werden, dessen Volumen zum Teil oder komplett mit porösem Material (z.B. Glaswolle) ausgekleidet ist.

Der Membranabsorber sollte insbesondere dort positioniert werden, wo störende Eigenfrequenzen der Struktur auftreten und der Querschnitt von Blatt so sind, dass stehende Wellen im Bereich der störenden Frequenz vorhanden sind.

Helmholtz Resonatoren (Fig. 9 (a) haben eine ähnliche Wirkung wie Membranabsorber bestehen aber lediglich aus einem Hohlraum der über genau definierte Öffnung mit dem zu beruhigenden Hohlraum, - hier der Innenraum des Blatts - verbunden ist. Der Helmholtz-Resonator wird dabei genau auf die störende Frequenz abgestimmt.

Um die Dämpfung und damit den wirksamen Frequenzbereich des Resonators zu vergrößern, kann der Hohlraum des Resonators mit dämpfendem oder porösem Material teilweise oder komplett ausgekleidet bzw. gefüllt werden. Die Öffnung des Hohlraums muss in seinen Abmessungen (Tiefe, Länge, Breite, Durchmesser) so gewählt werden, dass die gewünschte Frequenz erreicht wird. Die Öffnung muss dabei nicht rohrförmig ausgeführt werden. Sie kann auch schlitzförmig, quadratisch, rechteckig oder oval ausgeführt werden.

Die Membranabsorber und Helmholtz-Resonatoren sollten erfindungsgemäß dort angebracht werden wo der Druck der stehenden Welle am höchsten ist. Dies ist vor allem an den reflektierenden Wänden der Fall. Auch an Ecken und Abschlüssen von längeren Strukturen treten besonders hohe Drücke auf. Dies sind ideale Positionen von Membranabsorbern und Helmholtz-Resonatoren.

Die genannten Membranabsorber oder Helmholtz-Resonatoren können auch aktiv ausgeführt werden. Diese aktiven Systeme sind so ausgeführt, dass zum einen die Membran und zum andere die Luft in dem Öffnung aktiv über einen Aktor in Phase, Frequenz und Amplitude gesteuert sind. Es sind auch Mikrofone, oder es ist ein entsprechendes Geräte notwendig, um den aktuellen Druck im Blatt und im Resonator zu messen. Die Verarbeitung der Daten erfolgt mit Hilfe einer vorzugsweise elektronischen Regler-Vorrichtung, die auf Basis der Mikrofonmessung den Aktor an der Membran oder Öffnung optimal ansteuert. Damit kann die stehende Welle ausgelöscht werden.

Die Luft in einem Helmholtz-Resonator kann über einen Lautsprecher in Schwingungen versetzt werden. So können beide Systeme aktiv die stehenden Wellen auslöschen.

Die stehenden Wellen können erfindungsgemäß auch dadurch verhindert werden, dass oberhalb von 150 Hz zusätzlich Schalldämmmaterial an die Innenwände der Blätter angebracht wird. So wird die Reflexion von Schallwellen an den Innenwänden verhindert bzw. abgeschwächt wodurch sich stehenden Wellen nicht so gut ausbilden können. Die Oberflächenstruktur des Dämmmaterials kann, wie in schallarmen Räumen, so gewählt werden, dass die Schallwellen besonders effektiv dissipiert werden.

## Patentansprüche

1. Aerodynamische Profil-Struktur in Form eines Rotorblattes oder einer Tragfläche zur Verminderung oder Dissipation von Schallenergie und damit von Geräuschentwicklung durch stehende Wellen, welche bei Anregung unterhalb und / oder oberhalb der Schröderfrequenz innerhalb der Profil-Struktur auftreten, umfassend zwei oder mehr Innenkammern oder Hohlräume (6)(7)(8), die durch versteifende Zwischenwände (15)(16) im Inneren der Profil-Struktur gebildet werden und somit gleiche oder unterschiedliche Raumgeometrie aufweisen,
**dadurch gekennzeichnet, dass** die Innenkammern (6)(7)(8) innerhalb der Profil-Struktur so gestaltet und angeordnet sind, dass hohe Schalldrücke oder Schalldruck-Maxima von im Inneren der Profil-Struktur entstehenden stehenden Wellen an oder im unmittelbaren Bereich einer oder mehrerer der umgebenden, die Innenkammern bildenden Zwischenwände (15)(16) auftreten, und in diesem Bereich
(a) die Zwischenwände (15)(16) an den betreffenden Stellen eine Vielzahl von Öffnungen (12)(14) in Form von Schlitzen oder Bohrungen (14) aufweisen, durch welche Luft strömen kann und die benachbarte Innenkammern (6)(7)(8) miteinander verbinden, und / oder
(b) an den Zwischenwänden (15)(16) an den betreffenden Stellen oder in deren unmittelbare Nähe einen oder mehrere Schallabsorber (23)(24) angebracht sind,
wodurch jeweils der Schalldruck der stehenden Wellen in den betroffenen besagten Innenkammern minimiert oder dissipiert wird.

2. Aerodynamische Profil-Struktur nach Anspruch 1, **dadurch gekennzeichnet, dass** die Zwischenwände (15)(16), welche mit Öffnungen (12)(14) oder Schallabsorber (23)(24) versehen sind, in Längsrichtung zur Profil-Struktur angeordnet sind und dadurch entsprechende äußere (6)(8) und, im Falle mehrerer Zwischenwände, mittlere (7) Innenkammern bilden, so dass die besagten Öffnungen und Schallabsorber hierzu quer in Bewegungsrichtung der stehenden Wellen ausgerichtet sind.

3. Aerodynamische Profil-Struktur nach Anspruch 1 oder 2, **dadurch gekennzeichnet, dass** die Öffnungen (12)(14) oder Schallabsorber (23)(24) auf ausgewählte Bereiche einer Zwischenwand (15)(16) konzentriert sind, welche einen Abstand zueinander haben, der durch das Auftreten von Druckmaxima der stehenden Wellen bestimmt ist.

4. Aerodynamische Profil-Struktur nach einem der Ansprüche 1 - 3, **dadurch gekennzeichnet, dass** die Öffnungen (12)(14) mit passenden Rohrstücken (17) so versehen sind, dass die durch die Rohrstücke hindurch bewegte Luft gegen die stehende Welle an dieser Stelle schwingt und deren Frequenz erniedrigt.

5. Aerodynamische Profil-Struktur nach einem der Ansprüche 1 - 3, **dadurch gekennzeichnet, dass** die Öffnungen (12)(14) in Form von Helmholtz-Resonatoren ausgebildet sind, oder mit solchen versehen sind.

6. Aerodynamische Profil-Struktur nach einem der Ansprüche 1 - 5, **dadurch gekennzeichnet, dass** die Öffnungen, Schlitze oder Bohrungen (12)(14) groß genug sind, um stehende Wellen in einem Frequenzbereich unterhalb der Schröderfrequenz zu stören, zu verstimmen oder zu dissipieren.

7. Aerodynamische Profil-Struktur nach einem der Ansprüche 1 - 5, **dadurch gekennzeichnet, dass** die Öffnungen, Schlitze oder Bohrungen (12)(14) klein genug und in ausreichender Zahl vorhanden sind, um stehende Wellen in einem Frequenzbereich oberhalb der Schröderfrequenz zu stören, zu verstimmen oder zu dissipieren.

8. Aerodynamische Profil-Struktur nach einem der Ansprüche 1 - 7, **dadurch gekennzeichnet, dass** sie eine oder mehrere zusätzliche, in Längsrichtung aneinandergereihte, gleich- oder unterschiedlich lange, in sich abgeschlossene geschlossene Kammern aufweist, welche durch Trennwände (20)(21)(22) in den Innenkammern (6)(7)(8) gebildet sind, wodurch stehende Wellen in ihrer Frequenz und Energie geändert werden.

9. Aerodynamische Profil-Struktur nach Anspruch 8, **dadurch gekennzeichnet, dass** die Trennwände der einen oder mehreren Kammern (20)(21)(22) in Bezug zur Längsachse der Profil-Struktur schräg angeordnet sind..

10. Aerodynamische Profil-Struktur nach Anspruch 9 oder 10, **dadurch gekennzeichnet, dass** die Abstände der Kammern bzw. der Trennwände (20)(21)(22) zueinander so gewählt sind, dass die Frequenzen der neu-entstandenen stehenden Wellen nicht mit Eigenfrequenzen der Profil-Struktur, oder mit der Eigenfrequenz eines mit ihr verbundenen anregenden Maschineteils zusammenfällt.

11. Aerodynamische Profil-Struktur nach einem der Ansprüche 8 - 10, **dadurch gekennzeichnet, dass** eine oder mehrere der die Trennwände (20)(21)(22) zwischen den durch sie gebildeten Kammern Öffnungen an Stellen aufweist, an denen Druckmaxima von stehenden Wellen auftreten.

12. Aerodynamische Profil-Struktur nach einem der Ansprüche 1 - 11, **dadurch gekennzeichnet, dass** Schallabsorber (18)(23)(24) ausgewählt sind aus der folgenden Gruppe, bestehend aus:
- Auskleidung mit schallaktiven Materialen, wie Dämmplatten
- Helmholtz-Resonatoren,
- Membranabsorbern,
- Verbundplatten-Resonatoren,
- Breitband-Kompaktabsorbern,
- asymmetrisch-strukturierte Absorbern,
- Diffusoren,
- mikroperforierten Platten- oder Folienabsorbern,
- mikroperforierter Blech- oder Kunststoffverkleidung, oder
- aktiven Systemen, welche stehende Wellen und Geräusche aller Art minimiert, wobei die Schallabsorber auch zusätzlich und auch im gesamten Innenraum und an den inneren Konturflächen der Profil-Struktur vorgesehen sein können.

13. Aerodynamische Profil-Struktur nach einem der Ansprüche 1 - 12, **dadurch gekennzeichnet, dass** zwischen Innenraum und Außenkontur der Profil-Struktur keine Lufteintritt -, oder Luftaustrittverbindung vorgesehen ist, so dass die für das optimale Strömungsverhalten verantwortliche Außenkontur unverändert bleiben kann.

14. Rotorblatt für eine Windkraftanlage oder Tragflügel oder Tragfläche für ein Flugzeug oder Fluggerät, **dadurch gekennzeichnet, dass** das Rotorblatt, der Tragflügel oder die Tragfläche eine aerodynamischen Profil-Struktur nach einem der Ansprüche 1 - 13 aufweist.

15. Windkraftanlage umfassend Turm, Gondel, Getriebe / Generator und Rotor, **dadurch gekennzeichnet, dass** die Rotorblätter eine aerodynamische Profil-Struktur nach einem der Ansprüche 1 - 13 aufweisen.
